# EUROPEAN PATENT SPECIFICATION

(11) **EP 3 581 818 B1**
(45) Date of publication and mention of the grant of the patent: **16.11.2022**
(21) Application number: 19179284.5
(22) Date of filing: 10.06.2019
(51) Int. Cl.: F16C 32/06, F16C 37/00

(54) **POROUS GAS BEARING**
PORÖSES GASLAGER
PALIER À GAZ POREUX

(30) Priority: 11.06.2018 US 201816005412; 11.06.2018 US 201816005415
(43) Date of publication of application: 18.12.2019
(73) Proprietor: Trane International Inc., Davidson, NC 28036 (US)
(72) Inventor: JEUNG, Sung Hwa, Onalaska, Wisconsin 54650 (US); JOHNSON, Jay H, Houston, Minnesota 55943 (US); HILL, Donald Lee, Cornelius, North Carolina 28031 (US); CAMBIO, Matthew, La Crosse, Wisconsin 54601 (US)
(74) Representative: Haseltine Lake Kempner LLP

(56) References cited:
- WO-A2-2013/103732
- DE-A1- 2 514 054
- DE-A1- 3 815 029
- JP-A- 2009 216 232
- US-A- 2 855 249
- US-A- 3 476 451
- US-A- 3 527 510
- US-A- 4 848 932
- US-A1- 2007 014 494
- US-A1- 2015 275 967
- US-A1- 2016 146 248
- US-A1- 2016 265 588
- US-A1- 2017 370 364
- US-A1- 2018 087 573

## Description

### FIELD

This description relates generally to a bearing for a heating, ventilation, air conditioning, and refrigeration (HVACR) system. More specifically, this description relates to a porous gas bearing for a compressor in the HVACR system.

### BACKGROUND

A heating, ventilation, air conditioning, and refrigeration (HVACR) system generally includes a compressor. Compressors, such as, but not limited to, centrifugal compressors, screw compressors, and scroll compressors, utilize bearings to support a spinning shaft. Various types of bearings have been considered, including hydrodynamic oil bearings and ball bearings, which require a lubricant system. In some circumstances, an oil-free operation is preferred. Such systems often utilize a magnetic bearing. Magnetic bearings do not utilize a lubricant, but can be expensive and require a control system.

HVACR systems can be utilized for a building or may be utilized in a transport application (e.g., trucks, cars, buses, trains, etc.).

JP 2009 216232A describes a fluid bearing device according to the preamble of claim 1, including a shaft and a bearing not in contact with the outer periphery of the shaft. The bearing has gas supply parts on both axial sides of the shaft for supplying gas all over the periphery of the shaft and a liquid supply part between both gas supply parts for supplying liquid all over the periphery of the shaft.

US 2018/087573 A1 describes an externally-pressured gas bearing system configured to provide at least lateral positioning of a rotating shaft of a machine using an externally-pressurized gas. The system comprises a bearing comprising: an outer housing that defines an outer housing gas inlet port that is configured to receive the gas from a gas supply; an inner housing that defines an inner housing gas inlet port that is configured to receive the gas from the outer housing gas inlet port; a frame; and a liner. The frame defines: an annular plenum located between the inner housing and the frame, the plenum configured to receive the gas from the inner housing gas inlet port and to circumferentially distribute the gas around the frame; a plurality of gas supply frame holes configured to receive the gas from the plenum; a plurality of frame gas exhaust orifices configured to route the gas away from the bearing; and a plurality of damping cavities. The plurality of damping cavities are configured to: receive the gas from the plurality of damping apertures; provide the gas to the plurality of frame gas exhaust orifices; and damp vibration of the shaft. The liner defines: a plurality of feedholes configured to receive the gas from the plurality of gas supply frame holes, circumferentially distribute the gas within a clearance defined between the liner and the shaft; a plurality of liner damping apertures configured to receive the gas from the clearance and provide the gas to the plurality of damping cavities; and a plurality of liner gas exhaust orifices configured to route the gas away from the plurality of damping cavities.

### SUMMARY

The invention is defined in the attached independent claims to which reference should now be made. Further, optional features may be found in the sub-claims appended thereto.

This description relates generally to a bearing for a heating, ventilation, air conditioning, and refrigeration (HVACR) system. More specifically, this description relates to a porous gas bearing for a compressor in the HVACR system.

In an embodiment, a porous gas bearing is disclosed. The porous gas bearing can be used to, for example, support a shaft such as, but not limited to, a compressor shaft of a compressor in an HVACR system. In an embodiment, the compressor can be a centrifugal compressor. In an embodiment, the centrifugal compressor is an oil-free centrifugal compressor.

The porous gas bearing includes a damping feature. In an embodiment, the porous gas bearing can include a plurality of damping features. The damping feature can, for example, reduce an amount of radial displacement of a shaft in a compressor.

A porous gas bearing is disclosed. The porous gas bearing includes a housing having a fluid inlet and an aperture. A porous surface layer is disposed within the housing surrounding the aperture in a circumferential direction. The porous surface layer includes a plurality of segments arranged in a longitudinal direction of the aperture. The porous surface layer is in fluid communication with the fluid inlet. A damping system includes a plurality of dampers. The plurality of dampers is disposed circumferentially about the aperture. The plurality of dampers is arranged in between a first segment of the plurality of segments of the porous surface layer and a second segment of the plurality of segments of the porous surface layer. The plurality of dampers includes a damper inlet disposed at the aperture and a damper chamber disposed radially outward from the damper inlet.

A refrigerant circuit is disclosed. The refrigerant circuit includes a compressor, a condenser, an expansion device, and an evaporator fluidly connected. The compressor includes a shaft. The shaft is supported by a porous gas bearing. The porous gas bearing includes a housing having a fluid inlet and an aperture. A porous surface layer is disposed within the housing surrounding the aperture in a circumferential direction. The porous surface layer includes a plurality of segments arranged in a longitudinal direction of the aperture. The porous surface layer is in fluid communication with the fluid inlet. A damping system includes a plurality of dampers. The plurality of dampers is disposed circumferentially about the aperture. The plurality of dampers is arranged in between a first segment of the plurality of segments of the porous surface layer and a second segment of the plurality of segments of the porous surface layer.

A centrifugal compressor is disclosed. The centrifugal compressor includes a shaft that rotates and a porous gas bearing. The porous gas bearing includes a housing having a fluid inlet and an aperture. A porous surface layer is disposed within the housing surrounding the aperture in a circumferential direction. The porous surface layer includes a plurality of segments arranged in a longitudinal direction of the aperture. The porous surface layer is in fluid communication with the fluid inlet. A damping system includes a plurality of dampers. The plurality of dampers is disposed circumferentially about the aperture of the housing. The plurality of dampers is arranged in between a first segment of the plurality of segments of the porous surface layer and a second segment of the plurality of segments of the porous surface layer.

A porous gas bearing is disclosed. The porous gas bearing includes a housing having a fluid inlet, a passageway and an aperture. The housing includes a first segment and a second segment disposed radially inward of the first segment. The passageway extends along a longitudinal direction of the aperture, circumferentially about the aperture, and between the first segment and the second segment. A plurality of O-rings are disposed at the ends of the housing to fluidly seal the passageway. A porous surface layer is disposed within the housing surrounding the aperture in a circumferential direction. The porous surface layer is in fluid communication with the fluid inlet via the passageway. A damping system includes a biasing member. The biasing member is disposed in the passageway. The biasing member is arranged radially outward from the porous surface layer.

A refrigerant circuit is disclosed. The refrigerant circuit includes a compressor, a condenser, an expansion device, and an evaporator fluidly connected. The compressor includes a shaft. The shaft is supported by a porous gas bearing. The porous gas bearing includes a housing having a fluid inlet and an aperture. A porous surface layer is disposed within the housing surrounding the aperture in a circumferential direction. The porous surface layer is in fluid communication with the fluid inlet. A damping system includes a biasing member. The biasing member being is disposed in a passageway that extends along the longitudinal direction of the aperture and circumferentially about the aperture. The biasing member is arranged radially outward from the porous surface layer.

A centrifugal compressor is disclosed. The centrifugal compressor includes a shaft that rotates and a porous gas bearing. The porous gas bearing includes a housing having a fluid inlet and an aperture. A porous surface layer is disposed within the housing surrounding the aperture in a circumferential direction. A porous surface layer is disposed within the housing surrounding the aperture in a circumferential direction. The porous surface layer is in fluid communication with the fluid inlet. A damping system includes a biasing member. The biasing member being is disposed in a passageway that extends along the longitudinal direction of the aperture and circumferentially about the aperture. The biasing member is arranged radially outward from the porous surface layer.

### BRIEF DESCRIPTION OF THE DRAWINGS

References are made to the accompanying drawings that form a part of this disclosure and which illustrate embodiments in which the systems and methods described in this specification can be practiced.
Figure 1 is a schematic diagram of a refrigeration circuit, according to an embodiment.
Figures 2A - 2C are schematic views of a porous gas bearing having a damping system, according to an embodiment.
Figures 3A and 3B are schematic views of a porous gas bearing having a damping system, according to an embodiment.
Figures 4A and 4B are schematic views of a porous gas bearing having a damping system, according to an embodiment.
Figures 5A - 5D are schematic views of a porous gas bearing having a damping system, according to an embodiment.
Figures 6A and 6B are schematic views of a porous gas bearing having a damping system, according to an embodiment.
Figure 7 is a schematic view of a porous gas bearing having a damping system, according to an embodiment.
Figures 8A and 8B are schematic views of a porous gas bearing having a damping system, according to an embodiment.
Figures 9A and 9B are schematic views of a porous gas bearing having a damping system, according to an embodiment.

Like reference numbers represent like parts throughout.

### DETAILED DESCRIPTION

This description relates generally to a bearing for a heating, ventilation, air conditioning, and refrigeration (HVACR) system. More specifically, this description relates to a porous gas bearing for a compressor in the HVACR system.

A porous gas bearing, as used in this specification, generally includes a layer of porous material on a bearing surface that includes an evenly distributed fluid flow over the porous surface. In an embodiment, the fluid flow can be a gas. In an embodiment, the fluid flow can be a mixture of a gas and a liquid.

In an embodiment, the porous gas bearing can be utilized in place of a hydrodynamic oil bearing, a ball bearing, a magnetic bearing, or the like. In particular, the porous gas bearing can be utilized in a compressor (e.g., a centrifugal compressor, etc.) of an HVACR system to provide a lubricant free system. Typically, porous gas bearings may provide a limited amount of damping due to a relatively low viscosity of the working fluid. In the embodiments disclosed in this specification, various damping systems are disclosed that can address the limited damping of porous gas bearings. Additionally, embodiments disclosed in this specification can include a porous gas bearing that utilizes refrigerant as the working fluid, which can increase a viscosity of the working fluid and can, for example, provide advantageous heat transfer properties to reduce a likelihood of bearing seizure due to thermal expansion of a shaft supported by the porous gas bearing.

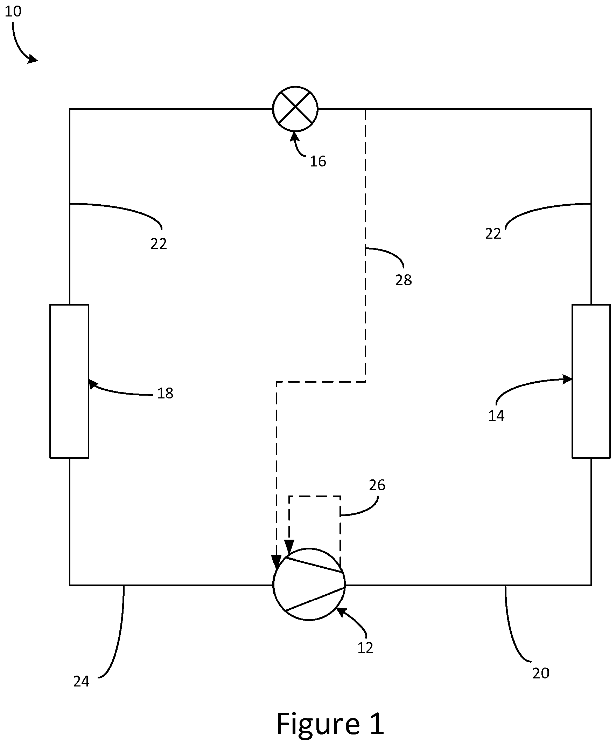

Figure 1 is a schematic diagram of a refrigerant circuit 10, according to an embodiment. The refrigerant circuit 10 generally includes a compressor 12, a condenser 14, an expansion device 16, and an evaporator 18.

The refrigerant circuit 10 is an example and can be modified to include additional components. For example, in an embodiment, the refrigerant circuit 10 can include other components such as, but not limited to, an economizer heat exchanger, one or more flow control devices, a receiver tank, a dryer, a suction-liquid heat exchanger, or the like.

The refrigerant circuit 10 can generally be applied in a variety of systems used to control an environmental condition (e.g., temperature, humidity, air quality, or the like) in a space (generally referred to as a conditioned space). Examples of such systems include, but are not limited to, HVACR systems, transport refrigeration systems, or the like.

The compressor 12, condenser 14, expansion device 16, and evaporator 18 are fluidly connected via refrigerant lines 20, 22, 24. In an embodiment, the refrigerant lines 20, 22, and 24 can alternatively be referred to as the refrigerant conduits 20, 22, and 24, or the like.

In an embodiment, the refrigerant circuit 10 can be configured to be a cooling system (e.g., an air conditioning system) capable of operating in a cooling mode. In an embodiment, the refrigerant circuit 10 can be configured to be a heat pump system that can operate in both a cooling mode and a heating/defrost mode.

The refrigerant circuit 10 can operate according to generally known principles. The refrigerant circuit 10 can be configured to heat or cool a gaseous process fluid (e.g., a heat transfer medium or fluid such as, but not limited to, air or the like), in which case the refrigerant circuit 10 may be generally representative of an air conditioner or heat pump.

In operation, the compressor 12 compresses a working fluid (e.g., a heat transfer fluid such as a refrigerant or the like) from a relatively lower pressure gas to a relatively higher-pressure gas. In an embodiment, the compressor 12 can be a centrifugal compressor. In an embodiment, the centrifugal compressor can operate at different speed ranges based on, for example, the compressor size and type. For example, in an embodiment, the centrifugal compressor can operate from at or about 10,000 revolutions per minute (RPM) to at or about 150,000 revolutions per minute (RPM). In an embodiment, the compressor 12 can be a screw compressor, a scroll compressor, or the like.

The relatively higher-pressure gas is also at a relatively higher temperature, which is discharged from the compressor 12 and flows through refrigerant line 20 to the condenser 14. The working fluid flows through the condenser 10 and rejects heat to a process fluid (e.g., water, air, etc.), thereby cooling the working fluid. The cooled working fluid, which is now in a liquid form, flows to the expansion device 16 via the refrigerant line 22. The expansion device 16 reduces the pressure of the working fluid. As a result, a portion of the working fluid is converted to a gaseous form. The working fluid, which is now in a mixed liquid and gaseous form flows to the evaporator 18 via the remainder of refrigerant line 22. The working fluid flows through the evaporator 18 and absorbs heat from a process fluid (e.g., water, air, etc.), heating the working fluid, and converting it to a gaseous form. The gaseous working fluid then returns to the compressor 12 via the refrigerant line 24. The above-described process continues while the refrigerant circuit is operating, for example, in a cooling mode (e.g., while the compressor 12 is enabled).

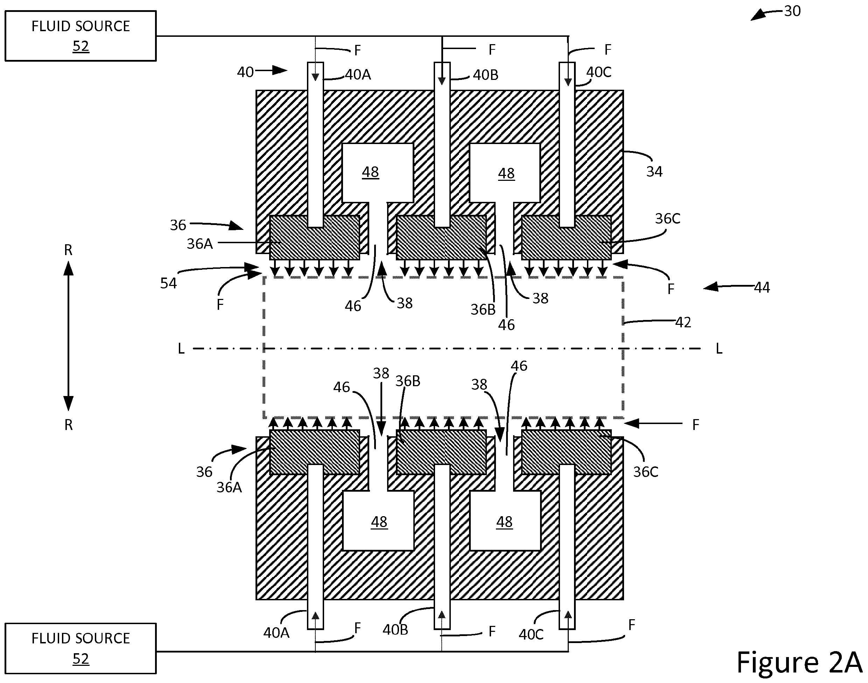

In the illustrated embodiment, a first fluid line 26 can be connected at a location at which fluid may be drawn from the compressor 12 and provided to a porous gas bearing in the compressor 12. In an embodiment, fluid line 26 can be connected at a location at which fluid provided to the porous gas bearing is gaseous or substantially gaseous. Embodiments of porous gas bearings are discussed in additional detail in accordance with Figures 2A - 9B below. A second fluid line 28 can be connected at a location at which fluid may be drawn from the refrigerant line 22 and provided to the porous gas bearing. In an embodiment, fluid line 28 can be connected at a location at which fluid provided to the porous gas bearing is in a mixed state including at least a portion that is liquid and at least a portion that is gaseous. It will be appreciated that the first fluid line 26 can be included in the refrigerant circuit 10, the second fluid line 28 can be included in the refrigerant circuit 10, or both the first and second fluid lines 26, 28 can be included in the refrigerant circuit 10.

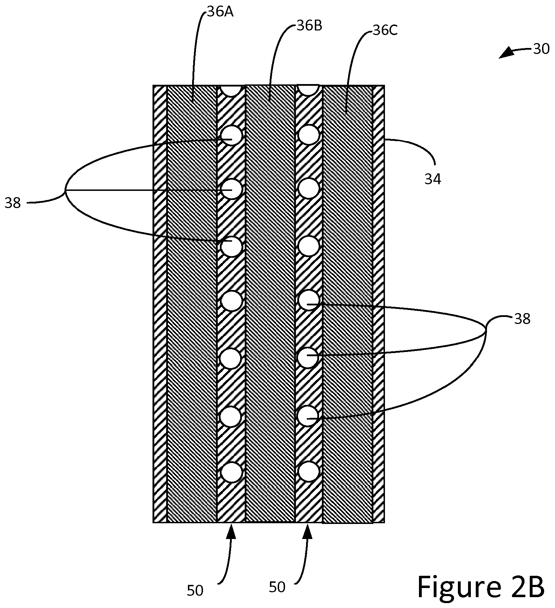

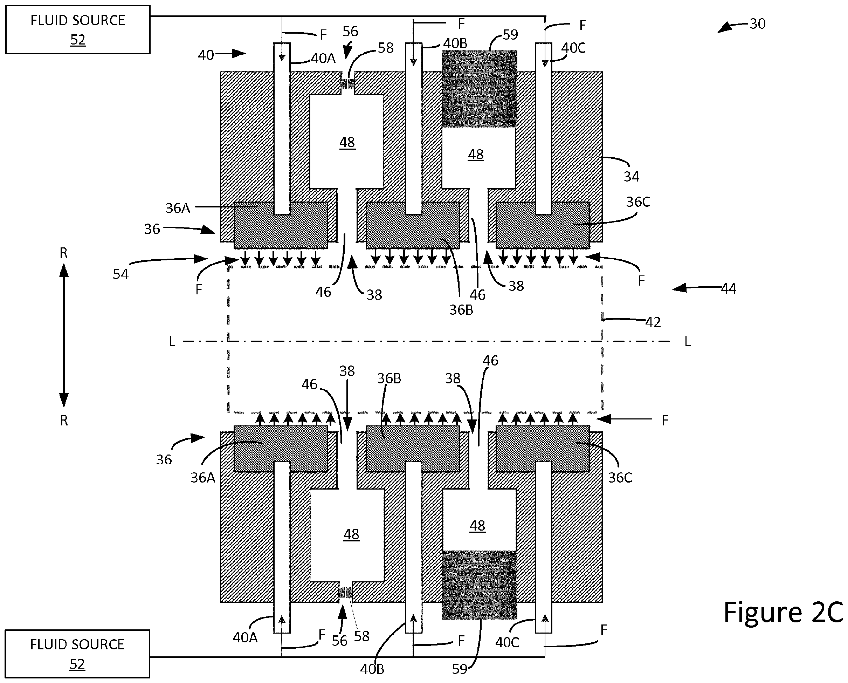

Figures 2A - 2C are schematic views of a porous gas bearing 30 having a damping system, according to an embodiment. Figure 2A is an axial cross-section of the porous gas bearing 30, according to an embodiment. Figure 2B is a view of an inner surface of the porous gas bearing 30 if unwound, according to an embodiment. Figure 2C is an axial cross-section of the porous gas bearing 30 including modifications to the damping system, according to an embodiment.

The porous gas bearing 30 in Figures 2A - 2C can be utilized in a compressor (e.g., compressor 12 in Figure 1) of a refrigerant circuit (e.g., refrigerant circuit 10 in Figure 1) of an HVACR system.

The porous gas bearing 30 with damping system includes a housing 34, a porous surface layer 36, and dampers 38 formed within the housing 34.

The porous surface layer 36 extends from a first end of the housing 34 to a second end of the housing 34. In the illustrated embodiment, the porous surface layer 36 includes a plurality of segments 36A - 36C. Each segment 36A - 36C is spaced apart from another segment 36A - 36C. Opposing ends of the individual segments 36A and 36B are longitudinally spaced from each other. Opposing ends of the individual segments 36B and 36C are longitudinally spaced from each other. The segments are separated by a circumferential groove 50 in which the dampers 38 are formed. (See Figure 2B). It will be appreciated that a number and size of the segments 36A - 36C can vary. The number and size of the segments 36A - 36C can be selected to provide a selected amount of damping and a selected stiffness for the porous gas bearing 30. The porous surface layer 36 can, in an embodiment, be made of a porous carbon graphite material. In an embodiment, the porous surface layer 36 can be any suitable porous material to accomplish the functionality described in this specification. In an embodiment, a porosity of the material can vary based on application and operating conditions. In an embodiment, the porous surface layer 36 can have a porosity of at or about 10% to at or about 30%.

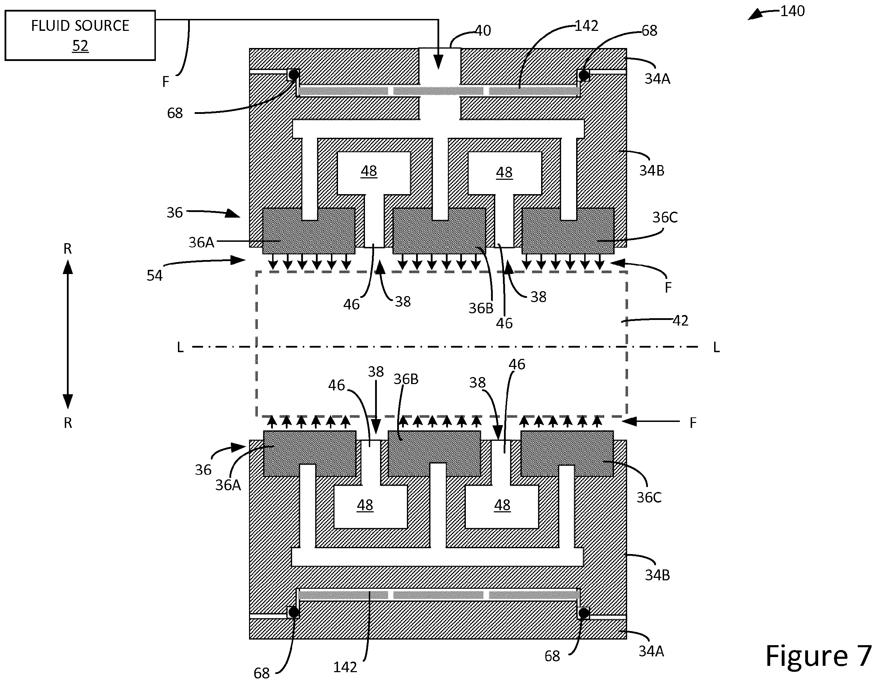

The porous surface layer 36 is in fluid communication with a fluid inlet 40. It will be appreciated that a number of fluid inlets 40 can be based on a number of the segments 36A - 36C of the porous surface layer 36. That is, in the illustrated embodiment, there are three fluid inlets 40A, 40B, and 40C, which correspond to the porous surface layers 36A, 36B, 36C. In an embodiment, there may be a single fluid inlet 40 that is split to be provided to the porous surface layer 36. Such an embodiment is shown and described in accordance with Figure 7 below.

A shaft 42 can be provided within an aperture 44 of the housing 34. The shaft 42 includes a longitudinal axis L - L that extends along a length of the shaft 42. In an embodiment, a clearance between the shaft 42 and the porous surface layer 36 can be at or about 2 microns to at or about 100 microns. A larger clearance means lower stiffness and larger leakage through the porous gas bearing 30. The selection of the clearance can depend, for example, upon the required stiffness of the rotor-bearing system. A radial direction R is shown in the figure. In operation, the shaft 42 rotates about the longitudinal axis L - L. The shaft 42 is subject to deflection in the radial direction R. To reduce an amount of movement in the radial direction R, the dampers 38 of the damping system can receive fluid F from the displacement of the shaft 42.

The dampers 38 include a damper inlet 46 and a damper chamber 48. The dampers 38 are illustrated as being fluidly separate in Figure 2A. It will be appreciated that the dampers 38 can be fluidly connected. The damper inlet 46 and the damper chamber 48 can be sized (e.g., to a selected volume, etc.) to provide a selected amount of damping.

In an embodiment, the dampers 38 can be configured differently at different locations along the longitudinal axis L - L of the shaft 42. In an embodiment, this can, for example, provide selective damping at particular locations of the shaft 42 that may be subject to more radial movement than other locations of the shaft 42.

In an embodiment, the dampers 38 may be machined into the housing 34 via the aperture 44. In an embodiment, it may be relatively simpler to manufacture the dampers 38 by machining the housing 34 from a radial outer direction toward the aperture 44. In such an embodiment, the housing 34 may be mechanically capped to prevent fluid from escaping the dampers 38. For example, with reference to Figure 2C, a bolt 59 can be inserted into the damper chamber 48. In such an embodiment, a volume of the damper chamber 48 may be determined based on how far into the damper chamber 48 the bolt 59 is inserted.

With reference to Figure 2B, the dampers 38 may be disposed in a circumferential groove 50 that is located between the segments 36A - 36C of the porous surface layer 36.

In operation, a fluid flow F is provided from a fluid source 52. The fluid source 52 can include, for example, fluid diverted from a refrigerant circuit (e.g., the refrigerant circuit 10 in Figure 1). In an embodiment, the fluid source 52 can be a source that is fluidly separate from the refrigerant circuit 10.

In an embodiment, the fluid can be diverted from a location via which a two-phase mixture (e.g., gas and liquid) is provided to the fluid inlets 40. In such an embodiment, the two-phase mixture can reduce an amount of heat generated by the porous gas bearing 30. In an embodiment, reducing an amount of heat can, for example, reduce the likelihood of bearing seizure caused by thermal growth of the shaft 42. In an embodiment, the two-phase mixture can also increase a viscosity of the working fluid for the porous gas bearing 30, thereby increasing a loading capacity of the porous gas bearing 30.

In an embodiment, a consideration for the fluid flow F is to provide a suitable pressure to form a fluid layer 54 between the shaft 42 and the porous surface layer 36. It will be appreciated that a pressure of the fluid flow F is relatively more important than a flow rate of the fluid flow. In an embodiment, the pressure of the fluid flow F can be based on a discharge pressure of the compressor (e.g., compressor 12 in Figure 1). A particular pressure may be selected based on a size (e.g., a weight) of a rotor and impeller assembly of the compressor 12. A minimum pressure can be determined based on when the rotor and impeller assembly lift (e.g., are spaced) from the porous gas bearing 30. It will be appreciated that the pressure of the fluid flow F can depend on a refrigerant type and compressor operating range. Examples of pressure ranges for representative refrigerants can include, but are not limited to, at or about 2 bar to at or about 24 bar for R-134a; at or about 4 bar to at or about 55 bar for R-410A; at or about 1 bar to at or about 20 bar for R-1234ze; at or about 2 bar to at or about 24 bar for R-513A; and at or about 0.5 bar to at or about 3.5 bar for R-1233zd.

Referring again to Figure 2C, the damper chambers 48 can also be provided with an aperture 56. The aperture 56 can include an orifice 58 that is selectively sized to enable fluid F to escape from the damper chamber 48. This can, for example, prevent over-pressurization of the damper chamber 48. It will be appreciated that the aperture 56 and orifice 58 are optional and may not be included in the housing 34. If included, the orifice 58 would be fluidly connected to the fluid source 52 so that fluid leaving the orifice is returned to the fluid source 52.

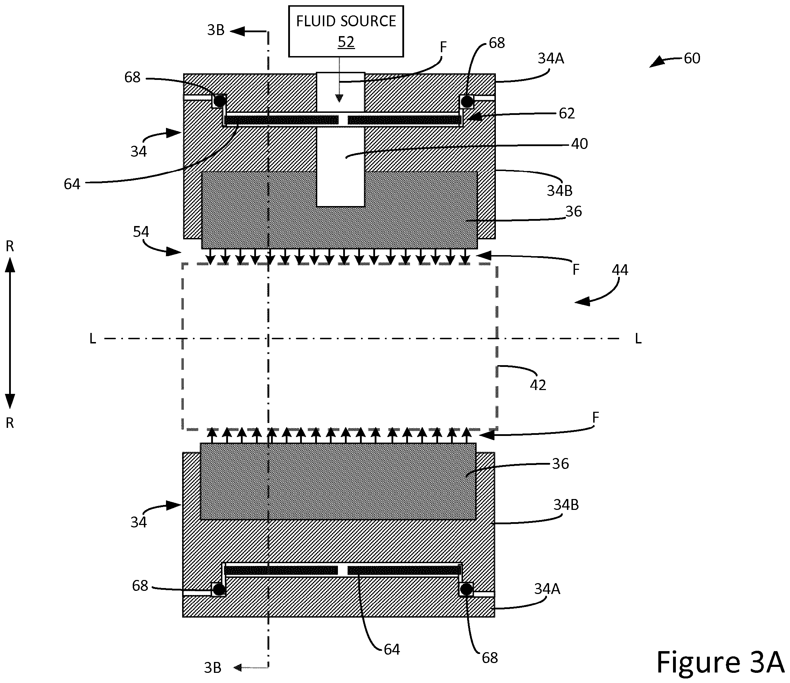

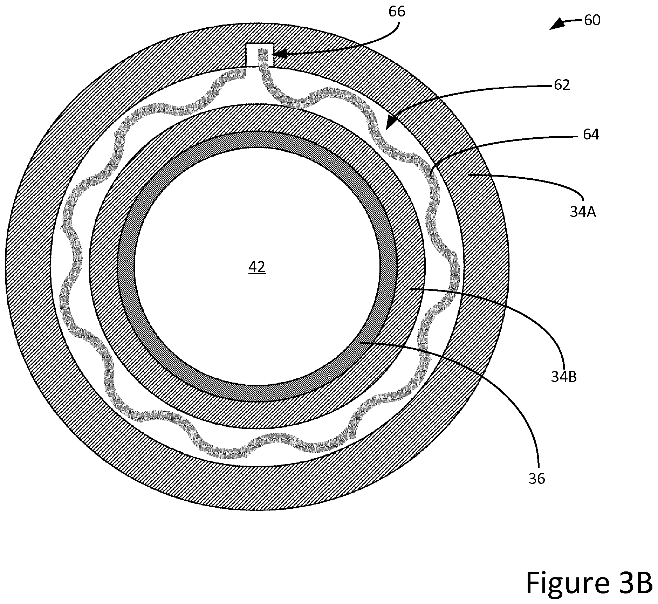

Figures 3A and 3B show a porous gas bearing 60 with a damping system, according to an embodiment. Figure 3A is an axial cross-section of the porous gas bearing 60 along the longitudinal axis L - L of the shaft 42. Figure 3B is a radial cross-section of the porous gas bearing 60. Unless specific reference is made, Figures 3A and 3B will be described generally.

Features of the porous gas bearing 60 may be the same as or similar to features of the porous gas bearing 30 (Figures 2A, 2B). Such features are labeled with like reference numbers and are generally not described in additional detail.

In the illustrated embodiment, the damping system includes a biasing member 64 disposed in a passageway 62. In an embodiment, the biasing member 64 can be a spring 64. In an embodiment, the spring 64 can include a wave spring 64. In an embodiment, the spring 64 can be installed in the porous gas bearing 60 under tension. The pre-loading tension of the spring 64 can be selected to control an amount of damping provided by the spring 64 when the porous gas bearing 60 is in use.

The porous gas bearing 60 with the damping system includes the housing 34. In the illustrated embodiment, the housing 34 includes a first segment 34A and a second segment 34B. The first segment 34A is disposed radially outward (with respect to the shaft 42) of the second segment 34B. The damping system (e.g., the biasing member 64) is disposed between the first segment 34A and the second segment 34B of the housing 34.

As shown in Figure 3B, in an embodiment, the first segment 34A of the housing 34 can include a retainer 66. In an embodiment, the retainer 66 can be a notch 66. An end section of the biasing member 64 can be inserted into the retainer 66. The arrangement of the biasing member 64 in the retainer 66 can, for example, prevent the biasing member 64 from moving (e.g., spinning, etc.) about the longitudinal axis L - L. It will be appreciated that the retainer 66 may be optional. In an embodiment, if the retainer 66 is not present, the spring may move within the housing 34. However, because the biasing member 64 can be pre-loaded, the movement within the housing 34 may be minimal.

In operation, the shaft 42 rotates about the longitudinal axis L - L. The shaft 42 is subject to deflection in the radial direction R. To reduce an amount of movement in the radial direction R, the biasing member 64 of the damping system can absorb force (e.g., be compressed) from the displacement of the shaft 42 in the radial direction R.

A plurality of O-rings 68 are disposed at ends of the housing 34 to fluidly seal the passageway 62. In an embodiment, the O-rings 68 can provide damping if the biasing member 64 is compressed. In an embodiment, the O-rings 68 can also account for slight misalignment between bearings disposed at different locations of the shaft 42.

According to an embodiment, the damping system of the porous gas bearing 60 and the damping system of the porous gas bearing 30 can be combined in a single embodiment to include the dampers 38 and the biasing member 64.

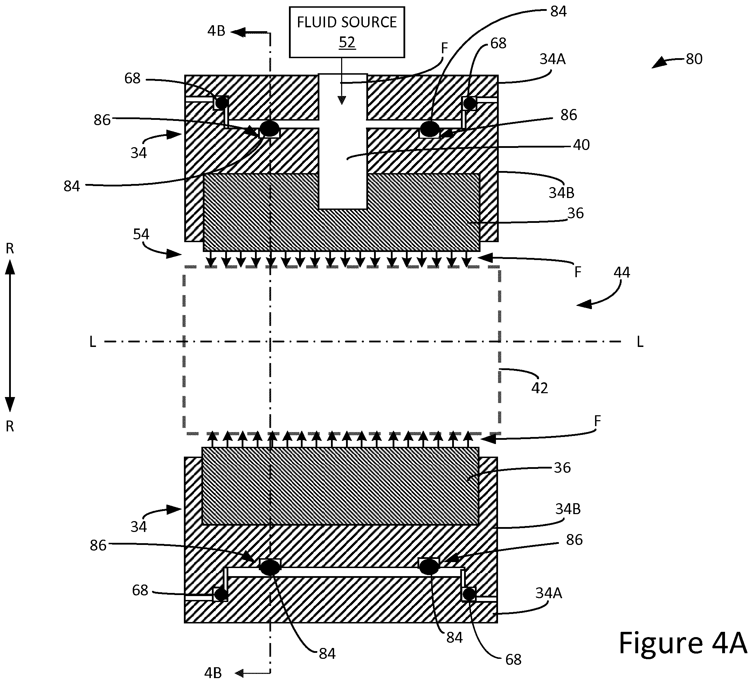

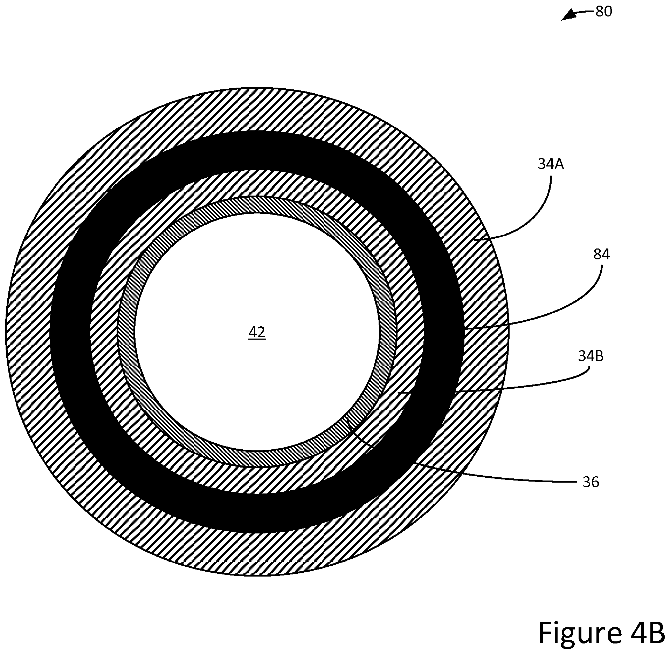

Figures 4A and 4B show a porous gas bearing 80 with a damping system, according to an embodiment. Figure 4A is an axial cross-section of the porous gas bearing 80 along the longitudinal axis L - L of the shaft 42. Figure 4B is a radial cross-section of the porous gas bearing 80. Unless specific reference is made, Figures 4A and 4B will be described generally.

Features of the porous gas bearing 80 may be the same as or similar to features of the porous gas bearing 30 (Figures 2A, 2B, 2C) and the features of the porous gas bearing 60 (Figures 3A, 3B).

In the illustrated embodiment, the damping system includes a plurality of biasing members 84. In an embodiment, the plurality of biasing members 84 can include a plurality of O-rings 84. In an embodiment, the plurality of O-rings 84 can include two O-rings 84. It will be appreciated that a number of the biasing members 84 can vary depending on a desired amount of damping to be provided by the damping system.

The porous gas bearing 80 having the damping system includes the housing 34. In the illustrated embodiment, the housing 34 includes the first segment 34A and the second segment 34B. The first segment 34A is disposed radially outward (with respect to the shaft 42) of the second segment 34B. The damping system (e.g., the biasing member 84) is disposed between the first segment 34A and the second segment 34B of the housing 34.

As shown in Figure 4A, the second segment 34B of the housing 34 can include a plurality of retainers 86 (e.g., notches 86). The plurality of retainers 86 can provide a fixed location at which the biasing members 84 can be disposed and to prevent the biasing members 84 from being able to move axially (e.g., in a direction that is parallel to the longitudinal axis L - L). In an embodiment, the biasing members 84 can be made of a material that is compatible with refrigerant and lubricants for refrigerant. Examples of suitable materials include, but are not limited to, epichlorohydrin, nitrile, neoprene, viton, and the like.

According to an embodiment, the damping system of the porous gas bearing 80 and the damping systems of one or more of the porous gas bearings 30 and 60 can be combined in a single embodiment to include the dampers 38, the biasing member 64, and the biasing members 84.

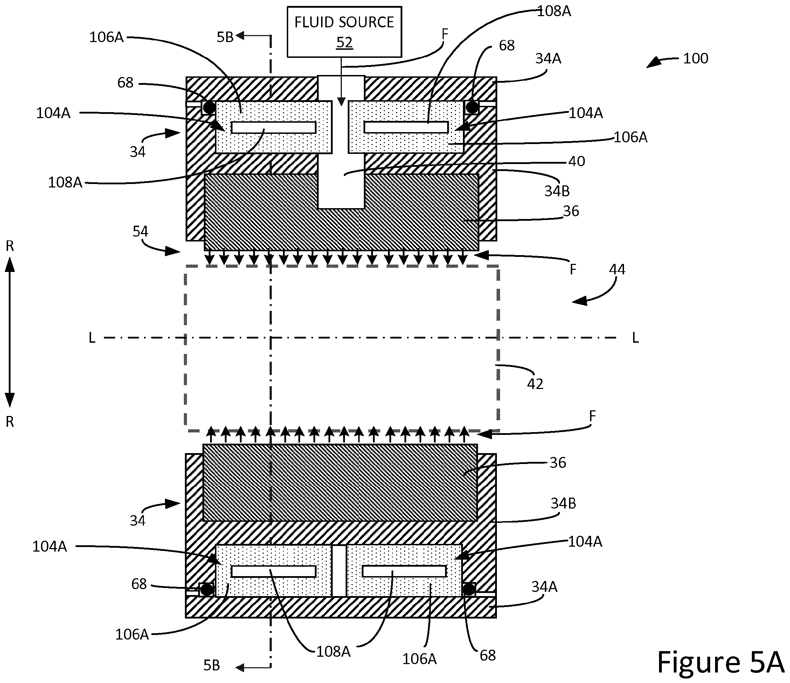

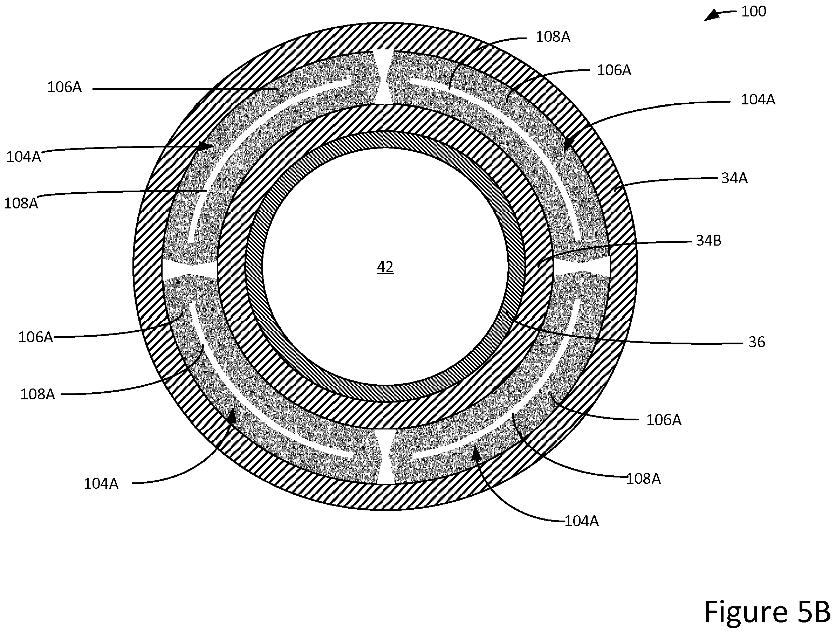

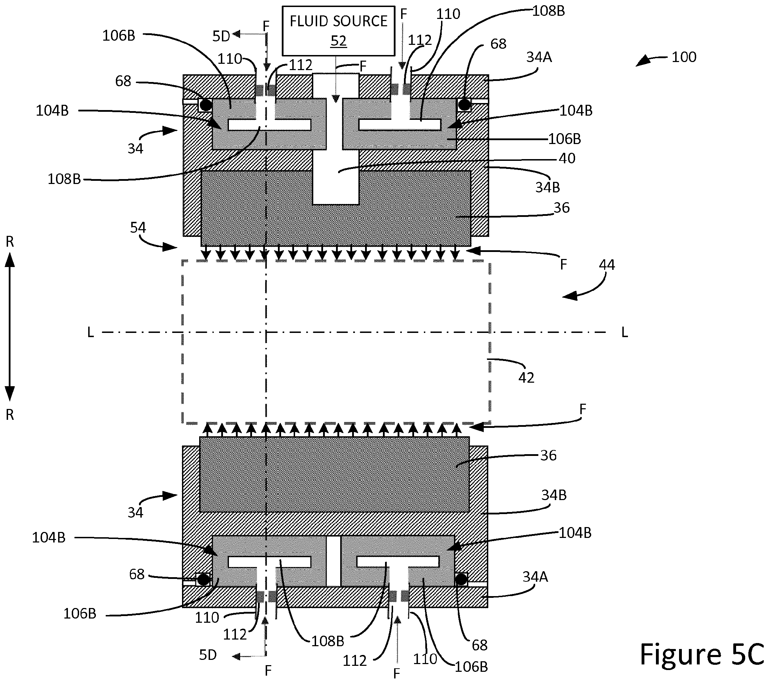

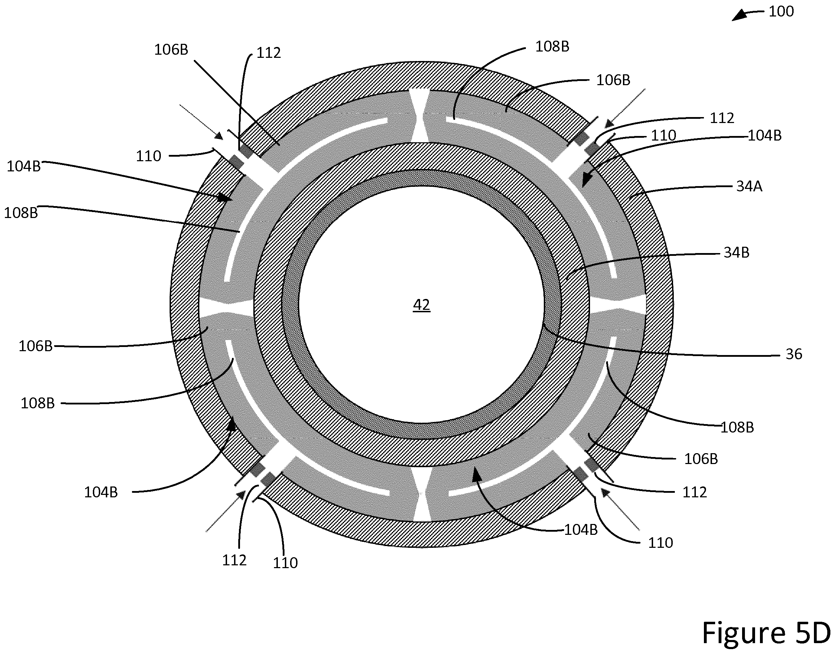

Figures 5A - 5D show a porous gas bearing 100 with a damping system, according to an embodiment. Figure 5A is an axial cross-section of the porous gas bearing 100 along the longitudinal axis L - L of the shaft 42. Figure 5B is a radial cross-section of the porous gas bearing 100. Figure 5C is an axial cross-section of the porous gas bearing 100 and the damping system of Figure 5D along the longitudinal axis L - L of the shaft 42. Figure 5D is a radial cross-section of the porous gas bearing 100 having a modified damping system. Unless specific reference is made, Figures 5A and 5B will be described generally and Figures 5C and 5D will be described generally.

Features of the porous gas bearing 100 may be the same as or similar to features of the porous gas bearing 30 (Figures 2A, 2B), the features of the porous gas bearing 60 (Figures 3A, 3B), and the features of the porous gas bearing 80 (Figures 4A, 4B).

With reference to Figures 5A and 5B, the illustrated damping system includes a plurality of damping structures 104A. The damping structures 104A may alternatively be referred to as the squeeze film 104A. In the illustrated damping system, the damping structures 104A are hermetically sealed damping structures 104A. Four damping structures 104A are illustrated. It will be appreciated that a number of the damping structures 104A can vary.

The damping structure 104A has a housing 106A with a fluid 108A filled within the housing 106A. The housing 106A is flexible. A flexibility of the housing 106A as well as the properties of the fluid 108A within the housing 106A can determine a stiffness of the damping structure 104A. The stiffness of the damping structure 104A can determine an amount of damping possible by the damping system in Figures 5A and 5B. The stiffness and damping may on multiple factors such as, but not limited to, bearing size, bearing clearance, or the like. In an embodiment, the damping structure 104A may have a stiffness coefficient from at or about from 10⁶ MN/m to at or about 10⁸ MN/m and a damping coefficient from at or about 10 N^{∗}s/m to at or about 6 × 10⁵ N^{∗}s/m, depending on the bearing clearance and size.

With reference to Figures 5C and 5D, the illustrated damping system includes a plurality of damping structures 104B. The damping structures 104B may alternatively be referred to as the squeeze film 104B. In the illustrated damping system, the damping structures 104B are not hermetically sealed damping structures 104B. Four damping structures 104B are illustrated. It will be appreciated that a number of the damping structures 104B can vary.

The damping structure 104B has a housing 106B with a fluid 108B filled within the housing 106B. Different from the damping structure 104A in Figures 5A and 5B, the damping structure 104B includes a fluid inlet 110 and orifice 112. Fluid 108B is provided to the housing 106B. In an embodiment, the fluid 108B may be the same as the fluid F that is provided to the porous gas surface 36. In such an embodiment, the fluid 108B can be refrigerant. It will be appreciated that fluid inlet 110 allows fluid to move both into the orifice 112 and out of the orifice 112.

The housing 106B is flexible. A flexibility of the housing 106B as well as the properties of the fluid 108B, amount of the fluid 108B, and pressure of the fluid 108B within the housing 106B can determine a stiffness of the damping structure 104B. The stiffness of the damping structure 104B can determine an amount of damping possible by the damping system in Figures 5C and 5D. The damping structure 104B may have a variable stiffness based on the feeding of the fluid 108B into the housing 106B.

According to an embodiment, the damping systems of the porous gas bearing 100 in Figures 5A - 5D and the damping systems of the porous gas bearings 30, 60, and 80 can be combined in a single embodiment to include the dampers 38, the biasing member 64, the biasing members 84, and the damping structures 104A or 104B.

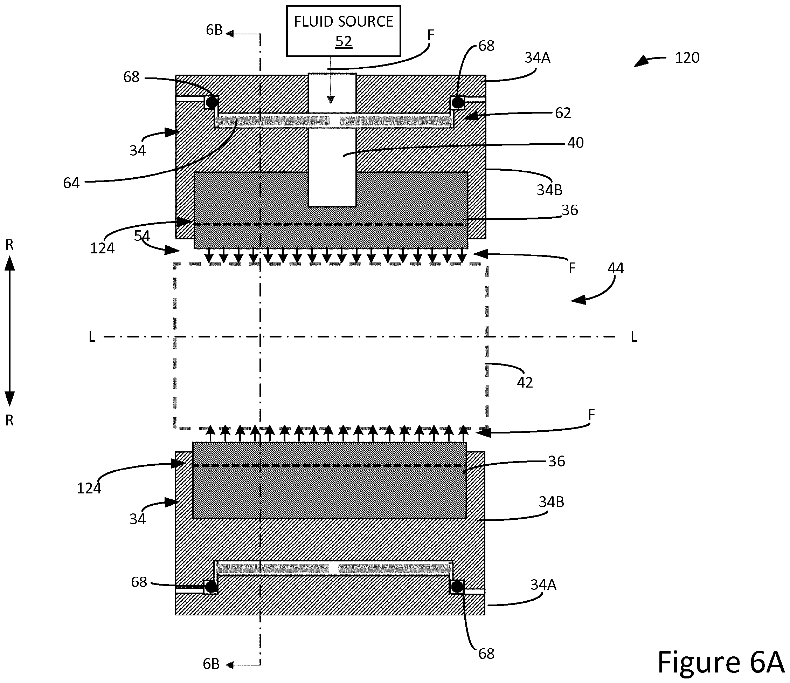

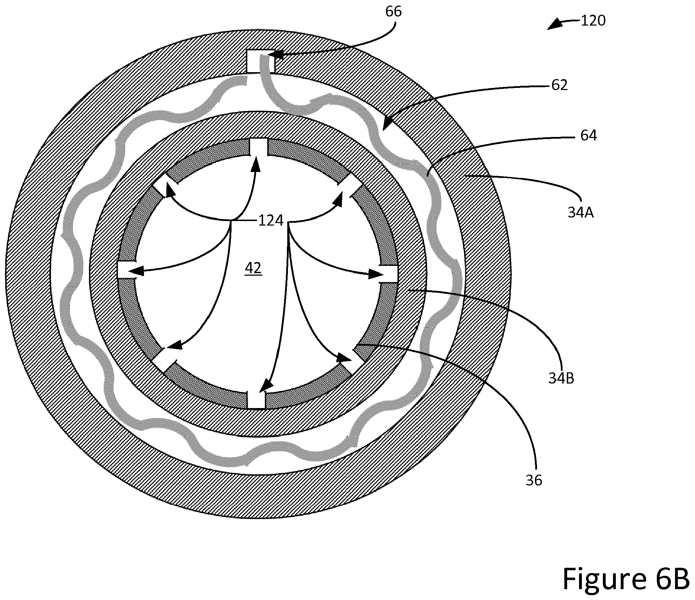

Figures 6A and 6B show a porous gas bearing 120 with a damping system, according to an embodiment. Figure 6A is an axial cross-section of the porous gas bearing 120 along the longitudinal axis L - L of the shaft 42. Figure 6B is a radial cross-section of the porous gas bearing 120. The porous gas bearing 120 and damping system are substantially the same as the porous gas bearing 60 and the damping system 62 in Figures 3A, 3B. Unless specific reference is made, Figures 6A and 6B will be described generally.

In the illustrated embodiment, the porous surface layer 36 includes a plurality of grooves 124. The grooves 124 can be formed radially about the porous gas bearing 120. The grooves 124 extend axially within the porous gas bearing 120. The grooves 124 can prevent a swirling of the fluid.

Figure 7 is a schematic view of a porous gas bearing 140 having a damping system, according to an embodiment. Figure 7 is an axial cross-section of the porous gas bearing 140, according to an embodiment.

The porous gas bearing 140 in Figure 7 can be utilized in a compressor (e.g., compressor 12 in Figure 1) of a refrigerant circuit (e.g., refrigerant circuit 10 in Figure 1) of an HVACR system.

The porous gas bearing 140 is substantially the same as the porous gas bearing 30 in Figures 2A, 2B. In the porous gas bearing 140, the damping system includes a combination of the damping systems in Figures 2A - 5D. In the porous gas bearing 140, the dampers 38 are included along with an additional damper 142. The additional damper 142 can be selected from the damping systems that are described in Figures 3A - 5D. Accordingly, the damper 142 can include one or more of the spring 64, the O-ring 84, the damping structures 104A, or the damping structures 104B. In an embodiment, the grooves 124 (Figures 6A, 6B) can be included in the porous gas bearing 140.

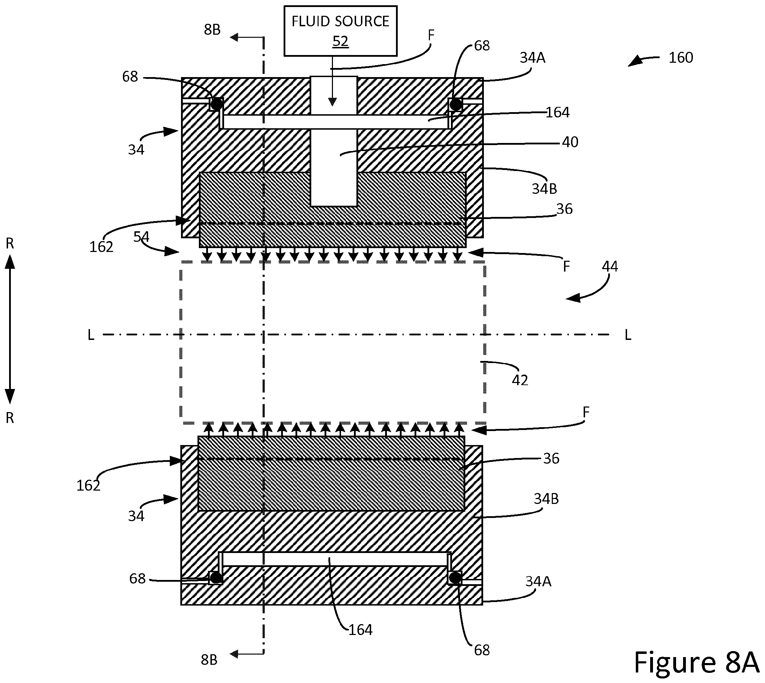

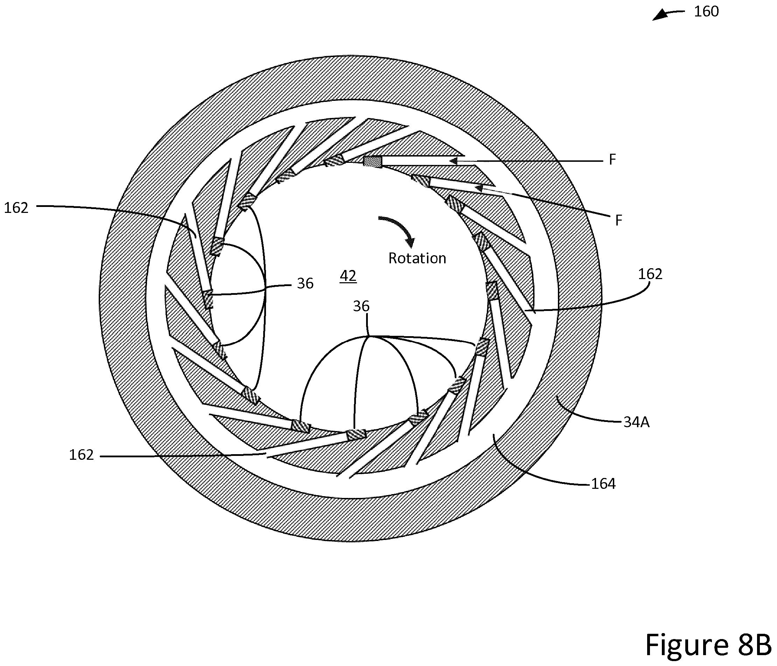

Figures 8A and 8B are schematic views of a porous gas bearing 160 having a damping system, according to an embodiment. Figure 8A is an axial cross-section of the porous gas bearing 160 along the longitudinal axis L - L of the shaft 42. Figure 8B is a radial cross-section of the porous gas bearing 160. Unless specific reference is made, Figures 8A and 8B will be described generally.

Features of the porous gas bearing 160 may be the same as or similar to features of the porous gas bearings shown and described in accordance with Figures 2A - 7 above. Such features are identified with like reference numbers.

In the illustrated embodiment, the housing 34 is modified to include a plurality of apertures 162 that fluidly communicate with the passageway 164. The apertures 162 extend to the porous surface layer 36 at an angle that is oriented to provide the fluid F in a direction that is against the direction of rotation of the shaft 42. Providing the fluid F at such an angle can, for example, reduce instability of the shaft 42, and accordingly, reduce an amount of movement in the radial direction R of the shaft.

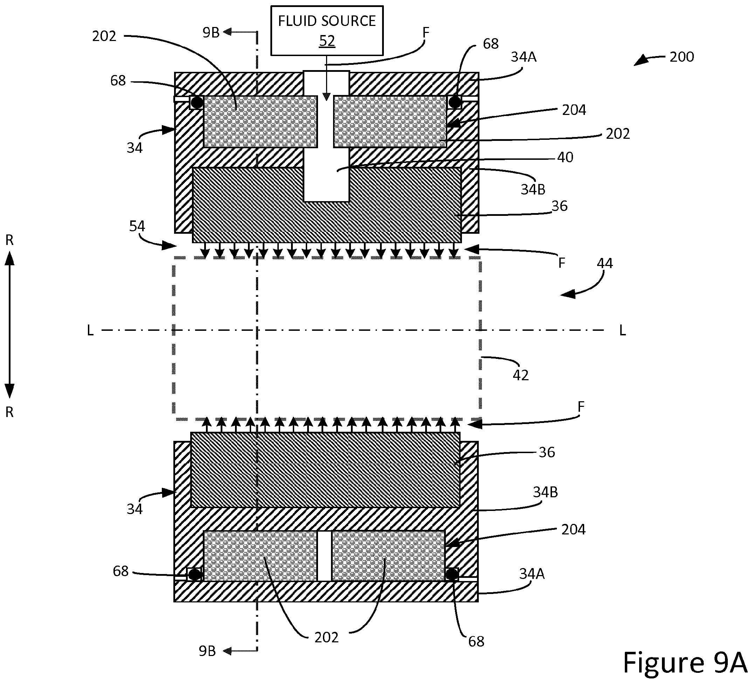

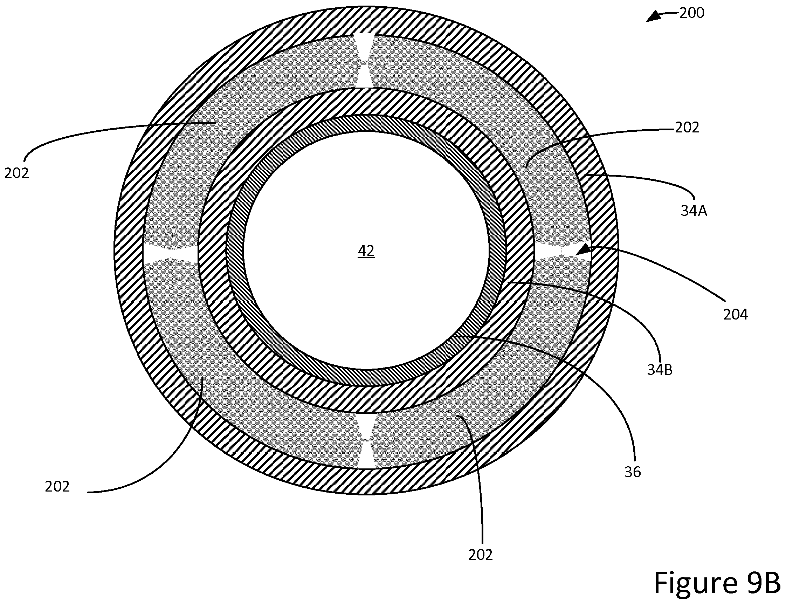

Figures 9A and 9B are schematic views of a porous gas bearing 200 having a damping system, according to an embodiment. Figure 9A is an axial cross-section of the porous gas bearing 200 along the longitudinal axis L - L of the shaft 42. Figure 9B is a radial cross-section of the porous gas bearing 200. Unless specific reference is made, Figures 9A and 9B will be described generally.

Features of the porous gas bearing 200 may be the same as or similar to features of the porous gas bearings shown and described above in accordance with Figures 2A - 7. Such features are labeled with like reference numbers.

In the illustrated embodiment, the damping system includes a damper 202 disposed in a passageway 204. In an embodiment, the damper 202 can include a wire mesh material. The wire mesh material can be made of a metal or a plastic. The wire mesh material can be knitted to form the mesh structure. The knitting of the material can provide a resiliency. The wire mesh material can be included in the passageway 204 so that movement of the shaft 42 in the radial direction R can be absorbed. The damper 202 can be a relatively cheaper alternative to the damping structures 104 (e.g., squeeze film) in the porous gas bearing 200. A material for the wire mesh material of the damper 202 can be selected so that a particular damping can be provided in the porous gas bearing 200. Suitable materials include, but are not limited to, steel, steel alloys, aluminum, copper, nickel alloys, titanium alloys, nylon, polyethylene, or the like.

According to an embodiment, the damping system of the porous gas bearing 200 and the damping system of the porous gas bearings in Figures 2A - 7 can be combined in a single embodiment to include the dampers 38, the biasing member 64, the biasing members 84, and the damper 202.

The terminology used in this specification is intended to describe particular embodiments and is not intended to be limiting. The terms "a," "an," and "the" include plural forms as well, unless clearly indicated otherwise. The terms "comprises" and/or "comprising," when used, indicated the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts, without departing from the scope of the present disclosure. The word "embodiment" may, but does not necessarily, refer to the same embodiment. The embodiments and disclosure are examples The scope of the present invention is defined by the appended claims.

## Claims

1. A porous gas bearing (30, 140), comprising:
a housing (34) having a fluid inlet (40) and an aperture (44);
a porous surface layer (36) disposed within the housing (34) surrounding the aperture (44) in a circumferential direction, the porous surface layer (36) including a plurality of segments (36A, 36B, 36C) arranged in a longitudinal direction of the aperture (44), the porous surface layer (36) in fluid communication with the fluid inlet (40); and
a damping system including a plurality of dampers (38), the plurality of dampers (38) are disposed circumferentially about the aperture (44), wherein the plurality of dampers (38) are arranged in between a first segment (36A) of the plurality of segments (36A, 36B, 36C) of the porous surface layer (36) and a second segment (36B) of the plurality of segments (36A, 36B, 36C) of the porous surface layer (36), **characterized in that** the plurality of dampers (38) includes a damper inlet (46) disposed at the aperture (44) and a damper chamber (48) disposed radially outward from the damper inlet (46).

2. A porous gas bearing (60, 80, 120, 140, 160), comprising:
a housing (34) having a fluid inlet (40), a passageway (62, 164) and an aperture (44), the housing (34) including a first segment (34A) and a second segment (34B) disposed radially inward of the first segment (34A), the passageway (62, 164) extending along a longitudinal direction of the aperture (44), circumferentially about the aperture (44), and between the first segment (34A) and the second segment (34B);
a plurality of O-rings (68) disposed at ends of the housing (34) to fluidly seal the passageway (62, 164);
a porous surface layer (36) disposed within the housing (34) surrounding the aperture (44) in a circumferential direction, the porous surface layer (36) in fluid communication with the fluid inlet (40) via the passageway (62, 164); and
a damping system including a biasing member (64, 84), the biasing member (64, 84) being disposed in the passageway (62, 164), wherein the biasing member (64, 84) is arranged radially outward from the porous surface layer (36).

3. The porous gas bearing (60, 80, 120, 140, 160) according to claim 2, wherein the biasing member (64, 84) includes a spring.

4. The porous gas bearing (60, 80, 120, 140, 160) according to claim 3, wherein the spring includes a wave spring.

5. The porous gas bearing (60, 80, 120, 140, 160) according to any of claims 2 to 4, wherein the biasing member (64, 84) is pre-tensioned to provide a selected amount of damping.

6. The porous gas bearing (140) according to any of claims 2 to 5, further comprising a plurality of dampers (38), the plurality of dampers (38) being disposed circumferentially about the aperture (44) in the housing (34).

7. The porous gas bearing (140) according to claim 6, wherein the plurality of dampers (38) include a damper inlet (46) and a damper chamber (48), the damper inlet (46) being disposed at the aperture (44), and the damper chamber (48) disposed radially outward from the damper inlet (46).

8. The porous gas bearing (30, 140) according to claim 1 or claim 7, wherein the damper chamber (48) is capped.

9. The porous gas bearing (30, 140) according to claim 1 or claim 7, wherein the plurality of dampers (38) includes a fluid outlet (56) for the damper chamber (48) and an orifice (58) in the fluid outlet, the fluid outlet being disposed radially outward from the aperture (44) relative to the damper chamber (48).

10. The porous gas bearing (30, 60, 80, 120, 140, 160) according to any of the preceding claims, wherein the fluid inlet (40) is fluidly connected to a refrigerant circuit (10).

11. The porous gas bearing (30, 60, 80, 120, 140, 160) according to claim 10, wherein the fluid inlet (40) is fluidly connected to the refrigerant circuit (10) at a location between a condenser (14) and expansion device (16) of the refrigerant circuit (10) or at a discharge location of a compressor (12) in the refrigerant circuit (10).

12. The porous gas bearing (30, 60, 80, 120, 140, 160) according to any of the preceding claims, further comprising a plurality of grooves (124) in the porous surface layer (36).

13. The porous gas bearing (30, 60, 80, 120, 140, 160) according to any of the preceding claims, the damping system further comprising one or more of a spring, an O-ring, a squeeze film, and a wire mesh.

14. The porous gas bearing (30, 60, 80, 120, 140, 160) according to any of the preceding claims, wherein the porous surface layer (36) is made of a carbon-graphite material.

15. A compressor (12), comprising:
a shaft (42) that is configured to rotate; and
a porous gas bearing (30, 60, 80, 120, 140, 160) as claimed in any of the preceding claims which supports the shaft (42).

16. The compressor (12) according to claim 15, wherein the shaft (42) is configured to rotate from at or about 10,000 revolutions per minute to at or about 150,000 revolutions per minute.

17. The compressor (12) according to claim 15 or 16, wherein the porous gas bearing (30, 60, 80, 120, 140, 160) is a radial bearing that supports the shaft (42).

18. The compressor (12) according to any of claims 15 to 17, wherein the compressor (12) is a centrifugal compressor (12).

19. A refrigerant circuit (10), comprising:
a compressor (12) according to any of claims 15 to 18, a condenser (14), an expansion device (16), and an evaporator (18) fluidly connected.

20. The refrigerant circuit (10) according to claim 19, further comprising a fluid source (52) that is fluidly separate from the refrigerant circuit (10), the fluid source (52) being fluidly connected to the porous gas bearing (30, 60, 80, 120, 140, 160).

21. The refrigerant circuit (10) according to claim 20, wherein the porous gas bearing (30, 60, 80, 120, 140, 160) is fluidly connected to the refrigerant circuit (10) at a location configured to receive a mixed gas and liquid fluid from the refrigerant circuit (10).

22. The refrigerant circuit (10) according to any one of claims 19 to 21, wherein the refrigerant circuit (10) is a lubricant free refrigerant circuit.

## Patentansprüche

1. Poröses Gaslager (30, 140), umfassend:
ein Gehäuse (34), das einen Fluideinlass (40) und eine Öffnung (44) aufweist;
eine poröse Oberflächenschicht (36), die in dem Gehäuse (34) die Öffnung (44) in einer Umfangsrichtung umgebend angeordnet ist, wobei die poröse Oberflächenschicht (36) eine Mehrzahl von Segmenten (36A, 36B, 36C) umfasst, die in einer Längsrichtung der Öffnung (44) angeordnet sind, wobei die poröse Oberflächenschicht (36) in Fluidverbindung mit dem Fluideinlass (40) steht; und
ein Dämpfungssystem, das eine Mehrzahl von Dämpfern (38) umfasst, wobei die Mehrzahl von Dämpfern (38) umlaufend um die Öffnung (44) angeordnet ist, wobei die Mehrzahl von Dämpfern (38) zwischen einem ersten Segment (36A) der Mehrzahl von Segmenten (36A, 36B, 36C) der porösen Oberflächenschicht (36) und einem zweiten Segment (36B) der Mehrzahl von Segmenten (36A, 36B, 36C) der porösen Oberflächenschicht (36) angeordnet ist, **dadurch gekennzeichnet, dass** die Mehrzahl von Dämpfern (38) einen Dämpfereinlass (46), der an der Öffnung (44) angeordnet ist, und eine Dämpferkammer (48), die von dem Dämpfereinlass (46) radial nach außen angeordnet ist, umfasst.

2. Poröses Gaslager (60, 80, 120, 140, 160), umfassend:
ein Gehäuse (34), das einen Fluideinlass (40), einen Durchgang (62, 164) und eine Öffnung (44) umfasst, wobei das Gehäuse (34) ein erstes Segment (34A) und ein zweites Segment (34B), das von dem ersten Segment (34A) radial nach innen angeordnet ist, umfasst, wobei sich der Durchgang (62, 164) entlang einer Längsrichtung der Öffnung (44), umlaufend um die Öffnung (44) und zwischen dem ersten Segment (34A) und dem zweiten Segment (34B) erstreckt;
eine Mehrzahl von O-Ringen (68), die an Enden des Gehäuses (34) angeordnet sind, um den Durchgang (62, 164) strömungstechnisch abzudichten;
eine poröse Oberflächenschicht (36), die in dem Gehäuse (34) die Öffnung (44) in einer Umfangsrichtung umgebend angeordnet ist, wobei die poröse Oberflächenschicht (36) über den Durchgang (62, 164) in Fluidverbindung mit dem Fluideinlass (40) steht; und
ein Dämpfungssystem, das ein Vorspannelement (64, 84) umfasst, wobei das Vorspannelement (64, 84) in dem Durchgang (62, 164) angeordnet ist, wobei das Vorspannelement (64, 84) von der porösen Oberflächenschicht (36) radial nach außen angeordnet ist.

3. Poröses Gaslager (60, 80, 120, 140, 160) nach Anspruch 2, wobei das Vorspannelement (64, 84) eine Feder umfasst.

4. Poröses Gaslager (60, 80, 120, 140, 160) nach Anspruch 3, wobei die Feder eine Wellfeder umfasst.

5. Poröses Gaslager (60, 80, 120, 140, 160) nach einem der Ansprüche 2 bis 4, wobei das Vorspannelement (64, 84) vorgespannt ist, um einen ausgewählten Betrag an Dämpfung bereitzustellen.

6. Poröses Gaslager (140) nach einem der Ansprüche 2 bis 5, ferner umfassend eine Mehrzahl von Dämpfern (38), wobei die Mehrzahl von Dämpfern (38) umlaufend um die Öffnung (44) in dem Gehäuse (34) angeordnet ist.

7. Poröses Gaslager (140) nach Anspruch 6, wobei die Mehrzahl von Dämpfern (38) einen Dämpfereinlass (46) und eine Dämpferkammer (48) umfasst, wobei der Dämpfereinlass (46) an der Öffnung (44) angeordnet ist und die Dämpferkammer (48) von dem Dämpfereinlass (46) radial nach außen angeordnet ist.

8. Poröses Gaslager (30, 140) nach Anspruch 1 oder Anspruch 7, wobei die Dämpferkammer (48) gekapselt ist.

9. Poröses Gaslager (30, 140) nach Anspruch 1 oder Anspruch 7, wobei die Mehrzahl von Dämpfern (38) einen Fluidauslass (56) für die Dämpferkammer (48) und eine Mündung (58) in dem Fluidauslass umfasst, wobei der Fluidauslass relativ zu der Dämpferkammer (48) von der Öffnung (44) radial nach außen angeordnet ist.

10. Poröses Gaslager (30, 60, 80, 120, 140, 160) nach einem der vorhergehenden Ansprüche, wobei der Fluideinlass (40) strömungstechnisch mit einem Kühlkreislauf (10) verbunden ist.

11. Poröses Gaslager (30, 60, 80, 120, 140, 160) nach Anspruch 10, wobei der Fluideinlass (40) strömungstechnisch mit dem Kühlkreislauf (10) an einer Position zwischen einem Kondensator (14) und einer Expansionsvorrichtung (16) des Kühlkreislaufs (10) oder an einer Ablassposition eines Verdichters (12) in dem Kühlkreislauf (10) verbunden ist.

12. Poröses Gaslager (30, 60, 80, 120, 140, 160) nach einem der vorhergehenden Ansprüche, ferner umfassend eine Mehrzahl von Nuten (124) in der porösen Oberflächenschicht (36).

13. Poröses Gaslager (30, 60, 80, 120, 140, 160) nach einem der vorhergehenden Ansprüche, wobei das Dämpfungssystem ferner eines oder mehrere einer Feder, eines O-Rings, eines Quetschfilms oder eines Drahtgeflechts umfasst.

14. Poröses Gaslager (30, 60, 80, 120, 140, 160) nach einem der vorhergehenden Ansprüche, wobei die poröse Oberflächenschicht (36) aus einem Kohlenstoffgraphitmaterial besteht.

15. Verdichter (12), umfassend:
eine Welle (42), die dazu ausgelegt ist, sich zu drehen; und
ein poröses Gaslager (30, 60, 80, 120, 140, 160) nach einem der vorhergehenden Ansprüche, das die Welle (42) lagert.

16. Verdichter (12) nach Anspruch 15, wobei die Welle (42) dazu ausgelegt ist, sich von bei oder etwa 10.000 Umdrehungen pro Minute bis zu bei oder etwa 150.000 Umdrehungen pro Minute zu drehen.

17. Verdichter (12) nach Anspruch 15 oder 16, wobei das poröse Gaslager (30, 60, 80, 120, 140, 160) ein Radiallager ist, das die Welle (42) lagert.

18. Verdichter (12) nach einem der Ansprüche 15 bis 17, wobei der Verdichter (12) ein Kreiselverdichter (12) ist.

19. Kühlkreislauf (10), umfassend:
einen Verdichter (12) nach einem der Ansprüche 15 bis 18, einen Kondensator (14), eine Expansionsvorrichtung (16) und einen Verdampfer (18), die strömungstechnisch verbunden sind.

20. Kühlkreislauf (10) nach Anspruch 19, ferner umfassend eine Fluidquelle (52), die strömungstechnisch von dem Kühlkreislauf (10) getrennt ist, wobei die Fluidquelle (52) strömungstechnisch mit dem porösen Gaslager (30, 60, 80, 120, 140, 160) verbunden ist.

21. Kühlkreislauf (10) nach Anspruch 20, wobei das poröse Gaslager (30, 60, 80, 120, 140, 160) strömungstechnisch mit dem Kühlkreislauf (10) an einer Position verbunden ist, die dazu ausgelegt ist, ein Gas- und Flüssigkeitsfluidgemisch von dem Kühlkreislauf (10) aufzunehmen.

22. Kühlkreislauf (10) nach einem der Ansprüche 19 bis 21, wobei der Kühlkreislauf (10) ein schmierstofffreier Kühlkreislauf ist.

## Revendications

1. Palier à gaz poreux (30, 140), comprenant :
un logement (34) ayant une entrée de fluide (40) et une ouverture (44) ;
une couche de surface poreuse (36) disposée à l'intérieur du logement (34) entourant l'ouverture (44) dans une direction circonférentielle, la couche de surface poreuse (36) comprenant une pluralité de segments (36A, 36B, 36C) disposés dans une direction longitudinale de l'ouverture (44), la couche de surface poreuse (36) étant en communication fluidique avec l'entrée de fluide (40) ; et
un système d'amortissement comprenant une pluralité d'amortisseurs (38), la pluralité d'amortisseurs (38) est disposée de manière circonférentielle autour de l'ouverture (44), la pluralité d'amortisseurs (38) étant disposée entre un premier segment (36A) de la pluralité de segments (36A, 36B, 36C) de la couche de surface poreuse (36) et un second segment (36B) de la pluralité de segments (36A, 36B, 36C) de la couche de surface poreuse (36), **caractérisé en ce que** la pluralité d'amortisseurs (38) comprend une entrée d'amortisseur (46) disposée au niveau de l'ouverture (44) et une chambre d'amortisseur (48) disposée radialement à l'extérieur de l'entrée d'amortisseur (46).

2. Palier à gaz poreux (60, 80, 120, 140, 160), comprenant :
un logement (34) ayant une entrée de fluide (40), un passage (62, 164) et une ouverture (44), le logement (34) comprenant un premier segment (34A) et un second segment (34B) disposé radialement à l'intérieur du premier segment (34A), le passage (62, 164) s'étendant le long d'une direction longitudinale de l'ouverture (44), circonférentiellement autour de l'ouverture (44), et entre le premier segment (34A) et le second segment (34B) ;
une pluralité de joints toriques (68) disposés aux extrémités du logement (34) pour rendre étanche au fluide le passage (62, 164) ;
une couche de surface poreuse (36) disposée à l'intérieur du logement (34) entourant l'ouverture (44) dans une direction circonférentielle, la couche de surface poreuse (36) étant en communication fluidique avec l'entrée de fluide (40) par l'intermédiaire du passage (62, 164) ; et
un système d'amortissement comprenant un élément de sollicitation (64, 84), l'élément de sollicitation (64, 84) étant disposé dans le passage (62, 164), l'élément de sollicitation (64, 84) étant disposé radialement à l'extérieur de la couche de surface poreuse (36).

3. Palier à gaz poreux (60, 80, 120, 140, 160) selon la revendication 2, l'élément de sollicitation (64, 84) comprenant un ressort.

4. Palier à gaz poreux (60, 80, 120, 140, 160) selon la revendication 3, le ressort comprenant un ressort ondulé.

5. Palier à gaz poreux (60, 80, 120, 140, 160) selon l'une quelconque des revendications 2 à 4, l'élément de sollicitation (64, 84) étant précontraint pour fournir une quantité sélectionnée d'amortissement.

6. Palier à gaz poreux (140) selon l'une quelconque des revendications 2 à 5, comprenant en outre une pluralité d'amortisseurs (38), la pluralité d'amortisseurs (38) étant disposés circonférentiellement autour de l'ouverture (44) dans le logement (34).

7. Palier à gaz poreux (140) selon la revendication 6, la pluralité d'amortisseurs (38) comprenant une entrée d'amortisseur (46) et une chambre d'amortisseur (48), l'entrée d'amortisseur (46) étant disposée au niveau de l'ouverture (44), et la chambre d'amortisseur (48) étant disposée radialement à l'extérieur de l'entrée d'amortisseur (46).

8. Palier à gaz poreux (30, 140) selon la revendication 1 ou la revendication 7, la chambre d'amortisseur (48) étant fermée.

9. Palier à gaz poreux (30, 140) selon la revendication 1 ou la revendication 7, la pluralité d'amortisseurs (38) comprenant une sortie de fluide (56) pour la chambre d'amortisseur (48) et un orifice (58) dans la sortie de fluide, la sortie de fluide étant disposée radialement à l'extérieur de l'ouverture (44) par rapport à la chambre d'amortisseur (48).

10. Palier à gaz poreux (30, 60, 80, 120, 140, 160) selon l'une quelconque des revendications précédentes, l'entrée de fluide (40) étant en communication fluidique avec un circuit de réfrigérant (10).

11. Palier à gaz poreux (30, 60, 80, 120, 140, 160) selon la revendication 10, l'entrée de fluide (40) étant en communication fluidique avec le circuit de réfrigérant (10) à un emplacement entre un condenseur (14) et un dispositif d'expansion (16) du circuit de réfrigérant (10) ou à un emplacement de décharge d'un compresseur (12) dans le circuit de réfrigérant (10).

12. Palier à gaz poreux (30, 60, 80, 120, 140, 160) selon l'une quelconque des revendications précédentes, comprenant en outre une pluralité de rainures (124) dans la couche de surface poreuse (36).

13. Palier à gaz poreux (30, 60, 80, 120, 140, 160) selon l'une quelconque des revendications précédentes, le système d'amortissement comprenant en outre un ou plusieurs éléments parmi un ressort, un joint torique, un film compressible et un treillis métallique.

14. Palier à gaz poreux (30, 60, 80, 120, 140, 160) selon l'une quelconque des revendications précédentes, la couche de surface poreuse (36) étant en un matériau de carbone-graphite.

15. Compresseur (12), comprenant :
un arbre (42) qui est conçu pour tourner ; et
un palier à gaz poreux (30, 60, 80, 120, 140, 160) selon l'une quelconque des revendications précédentes qui supporte l'arbre (42).

16. Compresseur (12) selon la revendication 15, l'arbre (42) étant conçu pour tourner d'au moins 10 000 tours par minute à au moins 150 000 tours par minute.

17. Compresseur (12) selon la revendication 15 ou 16, le palier à gaz poreux (30, 60, 80, 120, 140, 160) étant un palier radial qui supporte l'arbre (42).

18. Compresseur (12) selon l'une quelconque des revendications 15 à 17, le compresseur (12) étant un compresseur centrifuge (12).

19. Circuit de réfrigérant (10), comprenant :
un compresseur (12) selon l'une quelconque des revendications 15 à 18, un condenseur (14), un dispositif d'expansion (16), et un évaporateur (18) en communication fluidique.

20. Circuit de réfrigérant (10) selon la revendication 19, comprenant en outre une source de fluide (52) qui est fluidiquement séparée du circuit de réfrigérant (10), la source de fluide (52) étant en communication fluidique avec le palier de gaz poreux (30, 60, 80, 120, 140, 160).

21. Circuit de réfrigérant (10) selon la revendication 20, le palier de gaz poreux (30, 60, 80, 120, 140, 160) étant en communication fluidique avec le circuit de réfrigérant (10) à un emplacement conçu pour recevoir un fluide gazeux et liquide mélangé provenant du circuit de réfrigérant (10).

22. Circuit de réfrigérant (10) selon l'une quelconque des revendications 19 à 21, le circuit de réfrigérant (10) étant un circuit de réfrigérant sans lubrifiant.
